Europäisches Patentamt

European Patent Office

Office européen des brevets

(19)

(11) Publication number: **0 056 831**
**B1**

## EUROPEAN PATENT SPECIFICATION

(12)

(45) Date of publication of patent specification: **22.08.84**

(51) Int. Cl.³: **C 08 F 10/00, C 08 F 4/62**

(21) Application number: **81100542.0**

(22) Date of filing: **26.01.81**

(54) Polymerization of olefins with blends of independently supported catalysts.

(43) Date of publication of application:
**04.08.82 Bulletin 82/31**

(45) Publication of the grant of the patent:
**22.08.84 Bulletin 84/34**

(84) Designated Contracting States:
**BE DE FR GB IT NL**

(56) References cited:
**DE-A-2 338 888**
**US-A-3 798 202**
**US-A-4 204 050**

(73) Proprietor: **THE DOW CHEMICAL COMPANY
Dow Center 2030 Abbott Road Post Office Box 1967
Midland Michigan 48640 (US)**

(72) Inventor: **Lowery, Kirb, Jr.
536 Sycamore
City of Lake Jackson, Texas (US)**
Inventor: **Vance, Fred Lee, Jr.
110 Sunflower
City of Lake Jackson, Texas (US)**

(74) Representative: **Hann, Michael, Dr. et al
Marburger Strasse 38
D-6300 Giessen (DE)**

EP 0 056 831 B1

Courier Press, Leamington Spa, England.

# 0 056 831

**Description**

Transition metal catalysts are widely employed to prepare polymers and copolymers of $\alpha$-olefins. For the most part, the polymer properties have been controlled or varied by changes in the process conditions as disclosed, for example, by Hogan et al U.S. Patent 2,825,721 or by Walker et al U.S. Patent 3,351,623.

It has now been discovered that the polymer properties can be varied by employing a blend of two different catalysts during polymerization of the $\alpha$-olefin. Such polymerization process provides:

(1) alteration of the physical properties of the polymer without changing process conditions;

(2) change in physical properties of the polymer without the use of hydrogen,

(3) change in polymer composition of copolymers by changing catalyst ratios rather than comonomer ratios and/or

(4) increased catalyst efficiency.

More specifically, the invention concerns a process for polymerizing one or more $\alpha$-olefins in the presence of catalytic quantities of a supported transition metal catalyst characterized in that the polymerization is conducted in the presence of a blend of catalytic quantities of at least two independently supported transition metal catalysts comprising (1) at least one inorganic halide supported Ziegler catalyst containing titanium, vanadium or mixture thereof and (2) at least one inorganic oxide supported chromium-containing catalyst.

A. Ziegler catalyst

Any inorganic halide supported Ziegler catalyst containing titanium and/or vanadium can be employed as one of the independently supported catalysts so long as it is catalytically active in polymerizing $\alpha$-olefins. Typical supported titanium and/or vanadium containing catalysts are described in U.S. Patents 4,067,822; 4,091,082; 4,097,659; 4,104,198 and 4,120,820 and British Patent 1,500,873.

Suitable supports for the Ziegler catalysts include the inorganic halides such as $TiCl_3$, $MgCl_2$, $AlCl_3$ and mixtures thereof. Particularly suitable are magnesium dihalide supported titanium catalysts prepared from an organomagnesium compound, a halide source, a titanium tetraalkoxide and a reducing agent, preferably a reducing agent which contains aluminum and the following atomic ratios of the elements:

Mg:Ti is from 0.1:1 to 200:1
    preferably from 1:1 to 100:1, and most preferably from 10:1 to 50:1;
Al:Ti is from 0.5:1 to 200:1
    preferably from 1:1 to 100:1, and most preferably from 5:1 to 50:1; and
xsX:Al is from 0:1 to 10:1
    preferably from 0.01:1 to 1:1, and most preferably from 0.1:1 to 0.4:1.

The "xsX" is that quantity of halide in excess of that theoretically required to convert all of the organomagnesium compound to magnesium dihalide.

B. Chromium catalyst

Any supported chromium-containing catalyst sufficiently active to polymerize an $\alpha$-olefin can be employed in the present invention. Suitable supported chromium catalysts include those disclosed in U.S. Patents 4,150,208 and 2,846,425 and British Patent 790,196. Suitable supports for the chromium catalysts include the inorganic oxides such as silica, alumina, silica-alumina, thoria, and zirconia.

The chromium catalyst and support are employed in an atomic ratio of Ms:Cr, where Ms is the metallic element in the support as follows:

Ms:Cr is from 10:1 to 1000:1,
    preferably from 20:1 to 500:1 and most preferably from 50:1 to 200:1.

Also suitable are catalysts which contain chromium and one or more transition metals from Groups IVB and/or VB of the Periodic Table. Those catalysts which employ inorganic oxide supports are suitable for use as modified chromium catalysts whereas those which employ halide type supports are suitable for use as modified Ziegler catalysts. Examples of the former are disclosed in U.S. Patents 4,041,224; 3,622,521; and 3,798,202. Examples of the latter are disclosed in U.S. Patents 3,847,957; 3,752,795; and 4,204,050.

The range of catalyst ratios employed is limited only by the ability of one catalyst to produce a significant change in the properties of the polymer that would be produced by the second catalyst. Because types of catalysts vary in productivity at any given set of process conditions, the effect of one

2

catalyst on the product resulting from the use of two catalysts is best described in terms of the fractional percent yield defined as follows for catalysts arbitrarily designated as type n and type m:

catalyst n productivity:

$$Pn = \frac{gms.\ polymer\ produced\ by\ catalyst\ n}{gms.\ catalyst\ n \times unit\ time}$$

catalyst n yield: $Yn = gms.\ catalyst\ n \times unit\ time \times Pn$
total yield: $T = Yn + Ym$
catalyst n fractional % yield: $Xn = Yn/T$
catalyst m fractional % yield: $Xm = 1 - Xn$.

Throughout this specification, unless noted otherwise, the subdesignation 'n' pertains to the inorganic halide supported catalyst and the subdesignation 'm' pertains to the inorganic oxide supported catalyst. Also this treatment assumes that direct linear combinations of catalysts will give results that are direct linear combinations of the results expected from each catalyst independently. This may not be entirely accurate due to catalysts synergestic interactions or concentration effects, but it serves the purpose of defining the limits of useful catalyst ratios.

The fractional percent yields, Xn and Xm, should be between 0.001 and 0.999, preferably between 0.01 and 0.99 and most preferably 0.1 and 0.9. Any value less than 0.001 or higher than 0.999 will tend to give results that cannot be distinguished from those of a single catalyst system. Within the range given, the value of Xn or Xm will be determined by the polymer physical properties desired.

In a catalyst system using two specific catalysts, it may be desirable to empirically relate physical properties to a ratio of catalyst components (e.g. Cr/Ti). Such a relationship is valid only if the individual catalyst compositions and process conditions are held invariant.

C. Monomers

Olefins useful in the practice of this invention are generally aliphatic $\alpha$-monoolefins and $\alpha$-diolefins having from 2 to 18 carbon atoms. Illustratively, such $\alpha$-olefins can include ethylene, propylene, butene-1, butadiene, pentene-1, 3-methylbutene-1, 4-methylpentene-1, hexene-1, octene-1, dodecene-1, octadecene-1, 1,7-octadiene, and mixtures thereof. It is understood that $\alpha$-olefins may be copolymerized with other $\alpha$-olefins and/or with minor amounts, i.e. up to about 25 weight percent based on the polymer, of other polymerizable ethylenically unsaturated monomers such as styrene, $\alpha$-methylstyrene and similar ethylenically unsaturated monomers which do not destroy conventional Ziegler catalysts. Most benefits are realized in the polymerization of aliphatic 1-monoolefins, particularly ethylene and mixtures of ethylene with up to about 50, especially from 0.1 to about 40 percent by weight, based on total monomer, of propylene, butene-1, hexene-1, octene-1, 4-methylpentene-1, 1,7-octadiene, butadiene or similar $\alpha$-olefins, preferably those having from 3 to about 10 carbon atoms, or diolefins.

D. Polymerization conditions

In practice, the independently supported catalysts are blended and mixed together just prior to entry into the reaction zone or vessel. Preferably they are fed or added separately from the $\alpha$-olefin monomer. The polymerization zone is maintained at temperatures in the range from about 0 to 300°C, preferably at solution polymerization temperatures, from about 120° to 270°C, for a residence time of a few seconds to 72 hours, preferably 15 seconds to 2 hours.

It is generally desirable to carry out the polymerization in the absence of moisture and oxygen with and a catalyst blend containing about 0.0001 to 0.1 millimoles titanium per liter of diluent. However, the most advantageous catalyst concentration will depend upon polymerization conditions such as temperature, pressure, solvent and presence of catalyst poisons. The foregoing range is given to obtain maximum catalyst yields in weight of polymer per unit weight of titanium.

Generally, an inert organic diluent, solvent or excess monomer is employed in the process as a diluent and carrier. Suitable inert diluents include, liquified ethane, propane, isobutane, n-butane, n-hexane, the various isomeric hexanes, isooctane, paraffinic mixtures of alkanes having from 8 to 12 carbon atoms, cyclohexane, methylcyclopentane, dimethylcyclohexane, dodecane, and industrial solvents composed of saturated or aromatic hydrocarbons such as kerosene, naphthas, etc., especially when freed of any olefin compounds and other impurities. Especially suitable are diluents having boiling points in the range from about —50° to 200°C.

The polymerization pressures preferably employed are relatively low, e.g., from about 50 to 30,000 psig (4.4—2040 atm), especially from 100 to 700 psig (7.8—48.6 atm). However, polymerization within the scope of the present invention can occur at pressures from atmospheric up to pressures determined by the capabilities of the polymerization equipment. During polymerization it is

O 056 831

desirable to stir the polymerization recipe to obtain better temperature control and to maintain uniform polymerization mixtures throughout the polymerization zone.

To optimize catalyst yields in the polymerization of ethylene, it is preferable to maintain an ethylene concentration in the solvent in the range of from about 1 to 99 weight percent, most advantageously from about 10 to 20 weight percent.

Although in the present invention it is not necessary to employ hydrogen in order to control the molecular weight of the polymer, the polymerization nevertheless can be employed in the presence of hydrogen as an additional control if so desired.

To realize the full benefit of the high efficiency dual catalyst of the present invention, care must be taken to avoid oversaturation of the solvent with polymer. If such saturation occurs before the catalyst becomes depleted, the full efficiency of the catalyst is not realized. For best results, it is preferred that the amount of polymer in the carrier not exceed about 50 weight percent based on the total weight of the reaction mixture.

The monomer or mixture of monomers is contacted with the catalytic reaction product in any conventional manner, preferably by bringing the catalytic reaction product and monomer together with intimate agitation provided by suitable stirring or other means. Agitation can be continued during polymerization, or in some instances, the polymerization can be allowed to remain unstirred while the polymerization takes place. In the case of more rapid reactions with more active catalysts, means can be provided for refluxing monomer and solvent, if any of the latter is present, in order to remove the heat of reaction. In any event, adequate means should be provided for dissipating the exothermic heat of polymerization. If desired, the monomer can be brought in the vapor phase into contact with the catalytic reaction product, in the presence or absence of liquid material. Polymerization can be effected in the batch manner, or in a continuous manner, such as, by passing the reaction mixture through an elongated reaction tube which is contacted externally with suitable cooling media to maintain the desired reaction temperature, or by passing the reaction mixture through an equilibrium overflow reactor or series.

The polymer is readily recovered from the polymerization mixture by driving off any unreacted monomer and solvent. No further removal of impurities is required. Thus, a significant advantage of the present invention is the elimination of the catalyst residue removal steps. In some instances, however, it may be desirable to add a small amount of a catalyst deactivating reagent of the types conventionally employed for deactivating Ziegler catalysts. The resultant polymer is found to contain insignificant amounts of catalyst residue.

The following examples illustrate the invention. All percentages are by weight and all parts are by molar or atomic ratio unless otherwise indicated. The melt index values $I_2$ and $I_{10}$ were determined by ASTM D 1238-70 and the density values were determined by ASTM D 1248-74.


Example 1
Preparation of an inorganic oxide supported chromium catalyst

A solution of 0.41 g of Cr VI oxide in 22 g of deionized water was mixed thoroughly with 20 g of Davidson 952 silica. The mixture was placed in a Vicor quartz tube and heated to 200°C for 2-1/2 hours fluidized by air dried by passing through a column of molecular sieves. After drying, the temperature was raised to 750°C for 21-1/2 hours. The activated catalysts was stored in a nitrogen filled dry box. The atomic ratio of Si:Cr was 81.2:1.


Example 2
Preparation of an inorganic oxide supported chromium catalyst

A 0.2 g quantity of $SrCO_3$ was added to 15 ml of deionized water and dissolved by adding 10 drops of concentrated nitric acid. To this solution was added 0.3 g of Cr VI oxide. The solution was then mixed with 15 g of Davidson 952 silica. The mixture was then dried at 100°C for 5 hours, giving a constant weight of about 15 g. The dried catalyst was heat activated in a VICOR tube at 535°C for 10 hours while fluidizing with air dried in a molecular sieve bed. The catalyst was subsequently cooled and stored under nitrogen. The atomic ratio of Si:Cr was 83:1.


Example 3
Preparation of an inorganic halide supported titanium catalyst

In a nitrogen filled dry box, a 1.5 ml volume of 0.5 M solution of ethylaluminum dichloride in Isopar® E (an isoparaffinic hydrocarbon having a boiling range of 116°C to 134°C commercially available from the Exxon Corp.) was added to a 4 oz. catalyst bottle containing 96 ml of Isopar® E. A 1.5 ml volume of a 0.01 M solution of tetraisopropyl titanate in Isopar® E was added to a catalyst bottle followed by the addition of 1.5 ml of 0.4 M solution of di-n-hexyl magnesium in Isopar® E with stirring. The catalyst bottle was then sealed with a rubber septum and removed from the dry box. The atomic ratio of Mg:Ti was 40:1, Al:Ti was 50:1 and xsCl:Al was 0.2:1.

4

Example 4

A. Present invention

To a stirred 5-liter batch reactor at 150°C containing 2 liters (25 psig, 1.76 $kg/cm^2$, solvent vapor pressure) of Isopar® E purified by passing through molecular sieves, was added 10 psig (0.70 $kg/cm^2$) chromatographic grade hydrogen and 340 psig (23.9 $kg/cm^2$) of ethylene which was purified by passing through molecular sieves. An Isopar® E slurry containing 0.1 g of the catalyst prepared in Example 1 above was syringed into a 75 ml pressure bomb under a nitrogen purge. The bomb was then pressured to 450 psig (31.6 $kg/cm^2$) with nitrogen and the catalyst was vented into the reactor. A 1 ml volume of 15% aluminum triethyl was vented into the reactor in the same manner followed by the injection of 15 ml of the catalyst slurry prepared in example 3 containing approximately 9 mg of catalyst. Ethylene was polymerized for 1 hour. The polymer was removed from the reactor and dried in a vacuum oven at 80°C. The 220 g of recovered polymer had a melt index ($I_2$) of 16.82, a melt index ($I_{10}$) of 143.5, an $I_{10}/I_2$ of 8.53, a density of 0.9617, and a catalyst efficiency of $220 \times 10^3$ g polymer/g Cr, or $2.0 \times 10^6$ g polymer/g Ti or $2 \times 10^3$ g polymer/g catalyst. The fractional percent yield of the inorganic halide supported catalyst, Xn, was 0.73 and the fractional percent yield of the inorganic oxide supported catalyst, Xm, was 0.27 calculated as follows:

$$Pn = 70 \text{ g}/6 \text{ mg} \times 30 \text{ minutes} = 389$$
$$Pm = 156 \text{ g}/0.2 \text{ g} \times 60 \text{ minutes} = 13$$
$$Yn = 9 \text{ mg} \times 60 \text{ minutes} \times 389 = 210$$
$$Ym = 0.1 \text{ g} \times 60 \text{ minutes} \times 13 = 78$$
$$T = Yn + Ym = 288$$
$$Xn = Yn/T = 210/288 = 0.73$$
$$Xm = 1 - Xn = 0.27.$$

B. Comparative experiment

Polymerization with an inorganic halide supported titanium catalyst only

In a polymerization similar to example 4A, 10 psig (0.70 $kg/cm^2$) hydrogen and 340 psig (23.9 $kg/cm^2$) ethylene was added to the reactor at a temperature of 150°C (25 psig, 1.76 $kg/cm^2$, solvent vapor). A 10 ml volume of the catalyst slurry of example 3, containing approximately 6 mg of catalyst was injected into the reactor and allowed to polymerize ethylene for 30 minutes. The 70 g of polymer recovered had a melt index ($I_2$) of 5.74, a melt index ($I_{10}$) of 46.8, an $I_{10}/I_2$ of 8.15, and a density of 0.9633. The efficiency was $1.0 \times 10^6$ g polymer/g Ti or $11.7 \times 10^3$ g polymer/g catalyst.

C. Comparative experiment

Polymerization with an inorganic oxide supported chromium catalyst only

In a polymerization similar to example 4A, 10 psig (0.70 $kg/cm^2$) hydrogen and 340 psig (23.9 $kg/cm^2$) ethylene were added to the reactor at a temperature of 150°C (25 psig, 1.76 $kg/cm^2$, solvent vapor). An Isopar® E slurry containing 0.2 g of catalyst prepared in example 1 was injected into the reactor and allowed to polymerize ethylene for 1 hour. The 156 g of polymer produced had a melt index ($I_2$) of 54.36, a melt index ($I_{10}$) of 407.2, an $I_{10}/I_2$ of 7.49, and a density of 0.9706. The efficiency was $78 \times 10^3$ g polymer/g Cr or $0.78 \times 10^3$ g polymer/g catalyst.

Example 5

A. Present invention

In a polymerization similar to example 4A, 345 psig (24.3 $kg/cm^2$) ethylene was added to the reactor at a temperature of 160°C (30 psig, 2.11 $kg/cm^2$, solvent vapor). An Isopar® E slurry containing 0.05 g of catalyst prepared in example 1 was injected into the reactor followed by the injection of 10 ml of a catalyst slurry as prepared in example 3, containing about 6 mg of catalyst. Ethylene was polymerized for 31 minutes.

The 97 g of polymer produced had a melt index ($I_2$) of 0.95, a melt index ($I_{10}$) of 13.5, an $I_{10}/I_2$ of 14.22, and a density of 0.9642. The efficiency was $190 \times 10^3$ g polymer/g Cr or $1.35 \times 10^6$ g polymer/g Ti or $1.7 \times 10^3$ g polymer/g catalyst. The fractional percent yield of the inorganic halide supported catalyst, Xn, was 0.75 and the fractional percent yield of the inorganic oxides supported catalyst, Xm, was 0.25 calculated as follows:

$$Pn = 61 \text{ g}/6 \text{ mg} \times 30 \text{ minutes} = 339$$
$$Pm = 121 \text{ g}/0.2 \text{ g} \times 45 \text{ minutes} = 13.4$$
$$Yn = 6 \text{ mg} \times 31 \text{ minutes} \times 339 = 63$$
$$Ym = 0.05 \text{ g} \times 31 \text{ min} \times 13.4 = 20.8$$
$$T = Yn + Ym = 83.8$$
$$Xn = Yn/T = 63/83.8 = 0.75$$
$$Xm = 1 - Xn = 1 - .75 = 0.25.$$

## O 056 831

B. Comparative experiment
Polymerization with inorganic oxide supported chromium catalyst only

In a polymerization similar to example 5A, using only a slurry containing 0.2 g of catalyst from example 1, ethylene was polymerized for 45 minutes. The 121 g of polymer produced had a melt index $(I_2)$ of 99.95, a melt index $(I_{10})$ of 809.6, an $I_{10}/I_2$ of 8.1, and a density of 0.9717. The efficiency was $81 \times 10^3$ g polymer/g Cr or $0.6 \times 10^3$ g polymer/g catalyst.

C. Comparative experiment
Polymerization with inorganic halide supported titanium catalyst only

In a polymerization similar to example 5A, using only 10 ml of the catalyst slurry as prepared in example 3, (containing about 6 mg of catalyst) ethylene was polymerized for 30 minutes. The 61 g of polymer produced had a melt index $(I_2)$ of 0.49, a melt index $(I_{10})$ of 3.66, an $I_{10}/I_2$ of 7.47, and a density of 0.9634. The efficiency was $0.85 \times 10^6$ g polymer/g Ti or $10 \times 10^3$ g polymer/g catalyst.

Example 6
A. Present invention

In a polymerization similar to example 4A, 357 psig (25.1 kg/cm²) ethylene was added to the reactor at a temperature of 145°C (18 psig, 0.91 kg/cm², solvent vapor). A 100 ml volume of 1-octene purged with nitrogen and stored over molecular sieves was injected into the reactor. A 10 ml of catalyst slurry as prepared in example 3, containing about 6 mg of catalyst was injected into the reactor followed by an Isopar® E slurry of 0.4 g of catalyst prepared in example 2. Ethylene and 1-octene were copolymerized for 28 minutes. The 131 g of copolymer produced had a melt index $(I_2)$ of 4.13, a melt index $(I_{10})$ of 47.2, an $I_{10}/I_2$ of 11.44, and a density of 0.9324. The efficiency was $32.8 \times 10^3$ g copolymer/g Cr or $1.8 \times 10^6$ g copolymer/g Ti or $0.32 \times 10^3$ g copolymer/g catalyst. The fractional percent yield of the inorganic halide supported catalyst, Xn, was 0.62 and the fractional percent yield of the inorganic oxide supported catalyst, Xm, was 0.38 calculated as follows:

$$Pn = 72 \text{ g}/6 \text{ mg} \times 30 \text{ minutes} = 400$$
$$Pm = 88 \text{ g}/0.4 \text{ g} \times 60 \text{ minutes} = 3.67$$
$$Yn = 6 \text{ mg} \times 28 \text{ minutes} \times 400 = 67.2$$
$$Ym = 0.4 \text{ g} \times 28 \text{ min} \times 3.67 = 41.1$$
$$Xn = Yn/Yn + Ym = 67.2/108.3 = 0.62$$
$$Xm = 1 - Xn = 1 - 0.62 = 0.38.$$

B. Comparative experiment
Polymerization with inorganic oxide supported chromium catalyst only

In a polymerization similar to example 6A, using 200 ml of 1-octene and using only 0.4 g of catalyst prepared in example 2, ethylene was copolymerized with 1-octene for 1 hour. The 88 g of copolymer produced had a melt index $(I_2)$ of 0.21, a melt index $(I_{10})$ of 4.69, an $I_{10}/I_2$ of 22.33, and a density of 0.9500. The efficiency was $22 \times 10^3$ g copolymer/g Cr or $0.22 \times 10^3$ g copolymer/g catalyst.

C. Comparative experiment
Polymerization with inorganic halide supported titanium catalyst only

In a polymerization similar to example 6A, using only 10 ml of the catalyst slurry as prepared in example 3 (containing 6 mg of catalyst), 1-octene was copolymerized for 36 minutes. The 72 g of copolymer produced gave an efficiency of $1 \times 10^6$ g copolymer/g Ti or $12.6 \times 10^3$ g copolymer/g catalyst. The copolymer had a melt index $(I_2)$ of 0.249, a melt index $(I_{10})$ of 3.35, an $I_{10}/I_2$ of 13.45, and a density of 0.9386.

Example 7

A. Seven supported catalyst blends were prepared and twenty-two polymerizations were conducted using these catalysts separately and in combinations under the same process conditions. Where possible, the total transition metal content of the catalyst or catalysts was held constant. The resulting data summarized in the following Table demonstrate:

1. the invention compared with single catalyst systems,
2. the effect of Cr/Ti ratios,
3. the effect of catalyst fractional percent yield, and
4. the invention compared with multiple transition metal catalysts.

B. The catalysts used were prepared as follows:

Catalyst I:
1% Cr Catalyst supported on an inorganic oxide

A solution of 0.15 gms of $CrO_3$ in 10 gms of water was thoroughly mixed with 8 gms of Davidson

6

grade 952 silica. The mixture was heated for one hour at 170°C in a VICOR tube while being fluidized with nitrogen. The temperature was then increased to 700°C and the catalyst was fluidized for 5 hours with dry air. The catalyst was cooled under nitrogen purge and stored under nitrogen. This catalyst contained 88.8 Si/Cr.

Catalyst II:
3% Cr Catalyst supported on an inorganic oxide
A catalyst was prepared as for catalyst I except that 0.45 gms of $CrO_3$ was used to give 29.6 Si/Cr.

Catalyst III:
Ziegler catalyst supported on an inorganic halide
In a nitrogen filled dry box, 0.6 ml of 0.5 M ethyl aluminum dichloride was added to 87.4 ml of Isopar® E in a 4 oz. catalyst bottle. A 1.5 ml volume of 0.4 M di-n-hexyl magnesium, 6.0 ml of 0.1 M titanium tetrachloride, and 4.5 ml of 0.1 M triethyl aluminum were also added to the solution in that order to form the active catalyst. The catalyst was then sealed with a rubber septum and removed from the dry box. The atomic ratio of Mg:Ti was 1:1, Al:Ti was 1.25:1, and xsCl:Al was 2.4:1.

Catalyst IV:
Titanium modified Cr catalyst supported on an inorganic oxide
A catalyst was prepared as for catalyst II except that 2.1 ml of tetraisopropyl titanate was added to the $N_2$ fluidized catalyst by syringe prior to heating with dry air at 700°C for 5 hours.

Catalyst V:
Titanium modified Cr catalyst supported on an inorganic oxide
A catalyst was prepared as for catalyst IV except that after addition of the titanate, the catalyst was treated 4.75 hours at 700°C while being fluidized by a 93% $N_2$=7% CO (by volume) mixture. The catalyst was cooled to 500°C and purged with $N_2$ for 30 minutes and then fluidized with dry air at 500°C for 15 minutes. Finally the catalyst was cooled while purging with $N_2$ and stored in a $N_2$ filled dry box.

Catalyst VI:
Chromium modified Ti catalyst supported on an inorganic halide
In a nitrogen filled dry box, 1.5 ml of 0.5 M ethyl aluminum dichloride was added to 96 ml of Isopar® E in a 4 oz. catalyst bottle. To this solution was added 1.5 ml of 0.4 M di-n-hexyl magnesium and 1.15 ml of an Isopar⁼ E solution of the reaction product of dichlorodiisopropyl titanate and $CrO_3$ (0.013 M Ti). The catalyst was then sealed with a rubber septum and removed from the dry box. The atomic ratio of Mg:Ti was 40:1, Al:Ti was 50:1, xsCl:Al was 0.2:1, and Cr/Ti was 0.41.

Catalyst VII:
Chromium modified Ti catalyst supported on an inorganic halide
A catalyst was prepared as for catalyst VI except that 1.88 ml of an Isopar⁼ E solution of the reaction product of tetraisopropyl titanate and $CrO_3$ (0.0081 M Ti) was used as the titanium source. The atomic ratio for Mg:Ti was 40:1, Al:Ti was 50:1, xsCl:Al was 0.2:1 and Cr/Ti was 0.16.

Polymerizations
Polymerizations for the catalyst comparisons were made in a 5 liter stirred batch reactor containing 2 liters of Isopar⁼ E purified by passing through molecular sieves. Each polymerization was run under the same process conditions, the only variables being the amounts and types of catalysts. The temperature was 160°C (15 psig, 105 kg/cm², vapor pressure) and the ethylene pressure was 325 psig (22.8 kg/cm²). No hydrogen was used.
The catalysts were weighed out in a nitrogen filled dry box and slurried in 50 ml of Isopar⁼ E except for catalysts III, VI and VII which were already slurries. In each polymerization, 5 ml of 0.1 M triethyl aluminum was injected into the reactor prior to adding the catalysts to react with any impurities that might have been present.
Results of the polymerizations are listed in the following Table.

# 0 056 831

### TABLE IA
### Dual catalysts

| Run | Mg/type | Cr (mg) | Ti (mg) | Cr/Ti | Total transition metals (mg) |
|---|---|---|---|---|---|
| 1* | 360/I[12] | 3.6 | — | — | 3.6 |
| 2* | 240/II[13] | 7.2 | — | — | 7.2 |
| 3* | 21/III[14] | — | 3.6 | — | 3.6 |
| 4* | 200/IV[15] | 6 | 8.4 | 0.71 | 14.4 |
| 5* | 200/V[16] | 6 | 8.4 | 0.71 | 14.4 |
| 6* | 12/VI[17] | .058 | .14 | 0.41 | 0.2 |
| 7* | 12/VII[18] | .023 | .14 | 0.16 | 0.16 |

### TABLE IA (cont'd)
### Productivity, yields and efficiencies

| Run | Pn[1] ($\times 10^{-3}$)11 | Pm[2] ($\times 10^{-3}$) | Xn[3] | Yn[4] (g) | Ym[5] (g) | T[6] (g) | T/Cr[7] ($\times 10^{-3}$) | T/Ti[8] ($\times 10^{-3}$) | T/catalyst[9] ($\times 10^{-3}$) |
|---|---|---|---|---|---|---|---|---|---|
| 1* | | 0.519 | | | 187 | | 51.9 | — | 0.519 |
| 2* | | 0.542 | | | 130 | | 18.1 | — | 0.542 |
| 3* | 5.76 | | | 121 | | | — | 33.6 | 5.76 |
| 4* | | 0.20 | | | 40 | | 6.67 | 4.76 | 0.20 |
| 5* | | 0.19 | | | 38 | | 6.33 | 4.52 | 0.19 |
| 6* | 12.7 | | | 152 | | | 2620. | 1085. | 12.7 |
| 7* | 9.17 | | | 110 | | | 4782. | 785. | 9.17 |

### TABLE IA (cont'd)
### Polymer physical properties
### Melt index

| Run | $(I_2)$ | $(I_{10})$ | $I_{10}/I_2$ | Density |
|---|---|---|---|---|
| 1* | 45.24 | 550.2 | 12.2 | .9517 |
| 2* | 3.32 | 86.12 | 25.9 | .9491 |
| 3* | .03 | 0.57 | 19.0 | .9553 |
| 4* | .08 | 3.11 | 38.9 | .9571 |
| 5* | .02 | 0.94 | 47.0 | .9600 |
| 6* | .34 | 5.50 | 16.2 | .9598 |
| 7* | .64 | 8.19 | 12.8 | .9602 |

### TABLE IB
### Dual catalysts

| Run | mg/type | Cr (mg) | Ti (mg) | Cr/Ti | Total transition metals (mg) |
|---|---|---|---|---|---|
| 8 | 300/I+24.5/III | 3 | 4.2 | 0.71 | 7.2 |
| 9 | 420/I+17.2/III | 4.2 | 2.95 | 1.4 | 7.2 |
| 10 | 100/I+36.4/III | 1 | 6.25 | 0.16 | 7.2 |
| 11 | 210/I+30/III | 2.1 | 5.1 | 0.41 | 7.2 |
| 12 | 600/I+49/III | 6 | 8.4 | 0.71 | 14.4 |
| 13 | 320/II+27.4/III | 9.6 | 4.7 | 2.0 | 14.3 |
| 14 | 160/II+14/III | 4.8 | 2.4 | 2.0 | 7.2 |
| 15 | 80/II+28/III | 2.4 | 4.8 | 0.54 | 7.2 |
| 16 | 300/II+24.5/III | 9 | 4.2 | 2.14 | 13.2 |
| 17 | 160/II+56/III | 4.8 | 5.6 | 0.54 | 14.4 |
| 18 | 70/II+70/IV[19] | 4.2 | 2.9 | 1.44 | 7.1 |
| 19 | 240/II+6/VI | 7.2 | .072 | 100. | 7.2 |
| 20 | 240/II+6/VII | 7.2 | .072 | 100. | 7.2 |
| 21 | 170/III+13.7/IV | 5.1 | 9.4 | 0.54 | 14.5 |
| 22 | 170/III+13.7/V | 5.1 | 9.4 | 0.54 | 14.5 |

8

### TABLE IB (cont'd)
#### Productivity, yields and efficiencies

| Run | Pn[1] $(\times 10^{-3})$[11] | Pm[2] $(\times 10^{-3})$ | Xn[3] | Yn[4] (g) | Ym[5] (g) | T[6] (g) | T/Cr[7] $(\times 10^{-3})$ | T/Ti[8] $(\times 10^{-3})$ | T/catalyst[9] $(\times 10^{-3})$ |
|---|---|---|---|---|---|---|---|---|---|
| 8 | | | 0.48 | | | 269 | 89.7 | 64.0 | 0.83 |
| 9 | | | 0.31 | | | 232 | 55.2 | 78.6 | 0.53 |
| 10 | | | 0.80 | | | 142 | 142. | 22.7 | 1.04 |
| 11 | | | 0.61 | | | 179 | 85.2 | 35.1 | 0.75 |
| 12 | | | 0.48 | | | 302 | 50.3 | 36.0 | 0.46 |
| 13 | | | 0.48 | | | 231 | 24.1 | 8.43 | 0.67 |
| 14 | | | 0.48 | | | 137 | 28.5 | 57.1 | 0.79 |
| 15 | | | 0.79 | | | 140 | 58.3 | 29.2 | 1.30 |
| 16 | | | 0.46 | | | 175 | 19.4 | 41.7 | 0.54 |
| 17 | | | 0.79 | | | 230 | 47.9 | 41.1 | 1.06 |
| 18 | | | N.A.[10] | | | 44 | 10.5 | 15.2 | 0.31 |
| 19 | | | 0.37 | | | 63 | 8.75 | 875. | 0.26 |
| 20 | | | 0.30 | | | 76 | 10.5 | 1056. | 0.31 |
| 21 | | | 0.997 | | | 125 | 24.5 | 13.3 | 0.68 |
| 22 | | | 0.997 | | | 102 | 20.0 | 10.9 | 0.56 |

### TABLE IB (cont'd)
#### Polymer physical properties
#### Melt index

| Run | $(I_2)$ | $(I_{10})$ | $I_{10}/I_2$ | Density |
|---|---|---|---|---|
| 8 | .19 | 3.70 | 19.5 | .9359 |
| 9 | .23 | 5.17 | 22.5 | .9465 |
| 10 | .07 | 1.17 | 16.7 | .9511 |
| 11 | .12 | 15.8 | 15.8 | .9477 |
| 12 | .56 | 8.37 | 15.0 | .9390 |
| 13 | .23 | 3.47 | 15.1 | .9470 |
| 14 | .07 | 1.11 | 15.9 | .9498 |
| 15 | .07 | 0.97 | 13.9 | .9504 |
| 16 | .10 | 1.89 | 18.9 | .9523 |
| 17 | .13 | 2.06 | 15.8 | .9499 |
| 18 | .42 | 7.62 | 18.1 | .9527 |
| 19 | 3.97 | 70.66 | 17.8 | .9526 |
| 20 | 3.00 | 48.46 | 16.1 | .9532 |
| 21 | .02 | 0.47 | 23.5 | .9525 |
| 22 | .02 | 0.26 | 13.0 | .9526 |

Table footnotes

[1] Pn is gms polymer produced by catalyst 'n'/gms catalyst 'n'—unit time

[2] Pm is gms polymer produced by catalyst 'm'/gms catalyst 'm'—unit time

[3] Xn is Yn/Yn+Ym

[4] Yn is gms catalyst 'n' × unit time × Pn

[5] Ym is gms catalyst 'm' × unit time × Pm

[6] T is Yn+Ym

[7] T/Cr is gms polymer/gms Cr=efficiency based on Cr

[8] T/Ti is gms polymer/gms Tl=efficiency based on Ti

[9] T/catalyst is gms polymer/gms catalyst=efficiency based on catalyst

[10] N.A.=non applicable

[11] $(\times 10^{-3})$=value indicated has been multiplied by $10^{-3}$. Actual value for polymerization No. 1, Pn is 519.

[12] Phillips B.P. 790,196; U.S. 3,622,521

[13] Phillips B.P. 790,196; U.S. 3,622,521

[14] Stamicarbon U.S. 4,097,659

[15] Phillips U.S. 3,622,521

[16] Chemplex U.S. 4,041,224

[17] Standard Oil U.S. 3,752,795

[18] Bressler, et al, U.S. 4,104,050

[19] Comparative Run Phillips U.S. 3,798,202

[20] The productivity and yield parameters Pn, Pm, Yn and Ym are given for the single component catalysts in Table IA.

9

C. The following comparisons can be made from the data given in the Table:

1. A comparison of polymerizations 1, 2 and 3 with 8—17 demonstrates the difference between single catalysts and the dual catalyst system. Each of these polymerizations has different productivities, yields, efficiencies and polymer properties even though they were run at the same process conditions and even though many were run at the same levels of transition metals. (The large difference in productivities of the seven single catalysts made it impossible to use the same T.M. level on each polymerization).

2. A comparison of polymerizations 8—11 indicate the control over physical properties that is available with the dual catalyst system of the present invention.

| Polymerization No. | Cr/Ti | M.I. ($I_2$) |
|---|---|---|
| 9 | 1.4 | 0.23 |
| 8 | 0.71 | 0.19 |
| 11 | 0.41 | 0.12 |
| 10 | 0.16 | 0.07 |

As can be seen, the Cr/Ti ratio is a good indication of the effect of the dual catalyst system of the present invention when changes in the Cr/Ti are due to changes in catalyst ratios. This effect is dependent on the process conditions only in limiting the range of physical properties possible as defined by the difference in properties of the two independent catalysts.

3. A comparison of polymerizations 8—11 with polymerizations 1 and 3 demonstrate the use of catalyst fractional percent yield.

| Polymerization No. | Xn | MI($I_2$) | $I_{10}/I_2$ | Catalyst |
|---|---|---|---|---|
| 1 | 0.0 | 45.24 | 12.0 | I(=m) |
| 9 | 0.31 | 0.23 | 22.5 | I+III |
| 8 | 0.48 | 0.19 | 19.5 | I+III |
| 11 | 0.61 | 0.12 | 15.8 | I+III |
| 10 | 0.80 | 0.07 | 16.7 | I+III |
| 3 | 1.0 | 0.03 | 19.0 | III(=n) |

As can be seen, when the Xn approaches unity, the melt index for the dual catalyst system approaches that of catalyst 'n' alone. As Xn approaches zero, the dual catalyst system melt index approaches that for catalyst 'm'.

The molecular weight distribution as represented by the $I_{10}/I_2$ value is a more complex, less linear function than melt index. Broader or more narrow molecular weight distribution can be obtained in the dual catalyst system than can be obtained with either of the two catalysts alone.

4. A comparison of polymerizations 4 and 12 reflects the difference between the Phillips' titanium modified chromium catalyst (U.S. 3,622,521) and the dual catalyst system at the same Cr/Ti ratio and total transition metal content. All of the physical properties differ and the dual catalyst system of the present invention offers better efficiencies.

The difference between the dual catalyst system and the Chemplex (U.S. 4,041,224) titanium modified chromium catalyst and the present invention is demonstrated by polymerizations 5 and 12. All physical properties are different and efficiencies are greater for the dual catalyst system of the present invention (12).

Because of differences in productivity, it was not possible to have equal transition metal contents when comparing the dual catalyst system (11) and the Standard Oil (U.S. 3,752,795) chromium modified titanium catalyst (6). At the same Cr/Ti ratio however, it is clear that the dual catalyst system of the present invention and the Standard Oil catalysts do not get similar physical polymer properties.

Although the transition metal contents in polymerizations 7 and 10 are not the same, it is obvious that the single magnesium chloride supported chromium modified titanium catalyst (7) and the dual catalyst system of the present invention (10) give different physical polymer properties for the same Cr/Ti ratio.

A comparison of polymerizations 9 and 18 indicate differences in physical properties and improved efficiencies for the dual catalyst system of the present invention (9) compared to the Phillips' (U.S. 3,798,202) dual catalyst system (18).

The Standard Oil chromium modified titanium catalyst (6) can be used in the dual catalyst system (19) to obtain different polymer physical properties. Likewise, the Dow chromium modified titanium catalyst can also be used in the dual catalyst system of the present invention (see polymerizations 7 and 20), and similarly the Phillips' (U.S. 3,622,521) titanium modified chromium catalyst (see

10

polymerizations 4 and 21), and the Chemplex (U.S. 4,041,224) titanium modified chromium catalyst (see polymerizations 5 and 22).

## Claims

1. A process for polymerizing one or more $\alpha$-olefins in the presence of catalytic quantities of a supported transition metal catalyst characterized in that the polymerization is conducted in the presence of a blend of catalytic quantities of at least two independently supported transition metal catalysts comprising (1) at least one inorganic halide supported Ziegler catalyst containing titanium, vanadium or mixture thereof and (2) at least one inorganic oxide supported chromium-containing catalyst.

2. The process of Claim 1 wherein the supported catalysts are employed in quantities so that the catalyst fractional yield from the inorganic halide supported catalyst (Xn) is 0.01 to 0.99.

3. The process of Claim 1 or 2 wherein the Ziegler catalyst is supported on a magnesium dihalide and the value for Xn is 0.1 to 0.9.

4. The process of Claim 1, 2 or 3 wherein polymerization is conducted under solution polymerization conditions.

5. The process of Claims 1, 2, 3 or 4, wherein the inorganic halide supported Ziegler catalyst (1) is a magnesium chloride supported titanium tetraalkoxide catalyst reduced with an aluminum-containing compound wherein the atomic ratios of Mg:Ti is from 0.1:1 to 200:1; Al:Ti is from 0.5:1 to 200:1 and xsCl:Al is from 0:1 to 10:1 and the inorganic oxide supported catalyst (2) is supported on silica and contains chromium oxide in an atomic ratio of Si:Cr of 10:1 to 1000:1.

6. The process of Claims 1, 2, 3, 4, or 5 wherein ethylene is polymerized under solution polymerization conditions.

7. The process of Claim 6 wherein ethylene is copolymerized with at least one other $\alpha$-olefin having from 3 to about 10 carbon atoms.

8. The process of Claim 7 wherein said other $\alpha$-olefin is octene-1, hexene-1, butene-1 or mixture thereof.

9. The process of Claim 8 wherein the other $\alpha$-olefin is octene-1.

10. An $\alpha$-olefin polymerisation catalyst which is a blend of at least two independently supported transition metal catalysts comprising (1) at least one inorganic halide supported Ziegler type catalyst containing titanium, vanadium or mixture thereof and (2) at least one inorganic oxide supported chromium-containing catalyst.

11. The catalyst blend of Claim 10 wherein the inorganic halide supported catalyst and the inorganic oxide supported catalyst are present in quantities so that the catalyst fractional yield from the inorganic halide supported catalyst (Xn) is 0.01 to 0.99.

12. The catalyst blend of Claim 10 or 11 wherein the Ziegler catalyst is supported on a magnesium dihalide and the value for Xn is 0.1 to 0.9.

13. The catalyst blend of Claims 10—12 wherein the inorganic halide supported Ziegler type catalyst (1) is a magnesium chloride supported titanium tetraalkoxide catalyst reduced with an aluminum-containing compound wherein the atomic ratios of Mg:Ti is 0.1:1 to 200:1; Al:Ti is 0.5:1 to 200:1 and xsCl:Al is 0:1 to 10:1 and the inorganic oxide supported catalyst (2) is supported on silica and contains chromium oxide in an atomic ratio of Si:Cr of 10:1 to 1000:1.

14. The catalyst blend of Claim 13 wherein the atomic ratio of Mg:Ti is 10:1 to 50:1; the atomic ratio Al:Ti is 5:1 to 50:1; the atomic ratio of xsCl:Al is 0.1:1 to 0.4:1; and, the atomic ratio of Si:Cr is 50:1 to 200:1.

## Patentansprüche

1. Verfahren zum Polymerisieren von einem oder mehreren $\alpha$-Olefinen in Gegenwart von katalytischen Mengen eines Trägerkatalysators eines Übergangsmetalls, dadurch gekennzeichnet, dass die Polymerisation in Gegenwart einer Mischung von katalytischen Mengen von mindestens zwei Trägerkatalysatoren eines Übergangsmetalls durchgeführt wird, wobei diese Mischung (1) mindestens einen anorganischen Halogenid-Träger-Ziegler-Katalysator, enthaltend Titan, Vanadin oder eine Mischung davon, und (2) mindestens einen anorganisches Oxid-Träger Chrom enthaltenden Katalysator enthält.

2. Verfahren nach Anspruch 1, dadurch gekennzeichnet, dass die Träger-Katalysatoren in derartigen Mengen verwendet werden, dass die fraktionierte Katalysatorausbeute aus dem anorganischen Halogenid-Trägerkatalysator (Xn) 0.01 bis 0.99 beträgt.

3. Verfahren nach Anspruch 1 oder 2, dadurch gekennzeichnet, dass der Ziegler-Katalysator von einem Magnesiumdihalogenid getragen wird und dass der Wert für Xn 0.1 bis 0.9 ist.

4. Verfahren nach den Ansprüchen 1, 2 oder 3, dadurch gekennzeichnet, dass die Polymerisation unter Bedingungen der Lösungspolymerisation durchgeführt wird.

5. Verfahren nach den Ansprüchen 1, 2, 3 oder 4, dadurch gekennzeichnet, dass der von einem anorganischen Halogenid getragene Ziegler-Katalysator (1) ein auf einem Magnesiumchlorid-Träger

# 0 056 831

Titantetraalkoxydkatalysator ist, der mit einer aluminiumhaltigen Verbindung reduziert worden ist, wobei die Atomverhältnisse von Mg:Ti bei 0.1:1 bis 200:1; Al:Ti bei 0.5:1 bis 200:1 und xsCl:Al bei 0:1 bis 10:1 liegen und der durch anorganisches Oxid getragene Katalysator (2) von Siliciumdioxid getragen wrid und Chromoxid im Atomverhältnis von Si:Cr von 10:1 bis 1000:1 enthält.

6. Verfahren nach den Ansprüchen 1, 2, 3, 4 oder 5, dadurch gekennzeichnet, dass Äthylen unter Bedingungen der Lösungspolymerisation polymerisiert wird.

7. Verfahren nach Anspruch 6, dadurch gekennzeichnet, dass Äthylen mit mindestens einem anderen $\alpha$-Olefin mit 3 bis 10 Kohlenstoffatomen mischpolymerisiert wird.

8. Verfahren nach Anspruch 7, dadurch gekennzeichnet, dass das andere $\alpha$-Olefin Okten-1, Hexen-1, Buten-1 oder eine Mischung davon ist.

9. Verfahren nach Anspruch 8, dadurch gekennzeichnet, dass das andere $\alpha$-Olefin Octen-1 ist.

10. Ein $\alpha$-Olefinpolymerisationskatalysator, der eine Mischung von mindestens zwei unabhängig getragenen Katalysatoren eines Übergangsmetalls ist, dadurch gekennzeichnet, dass er (1) mindestens einen Ziegler-Typ-Katalysator auf einem anorganischen Halogenidträger, der Titan, Vanadin oder eine Mischung davon enthält, und (2) mindestens einen chromhaltigen Katalysator auf einem anorganischen Oxidträger enthält.

11. Die Katalysatormischung nach Anspruch 10, dadurch gekennzeichnet, dass der Katalysator auf dem anorganischen Halogenidträger und der Katalysator auf dem anorganischen Oxidträger in solchen Mengen vorhanden sind, dass die fraktionierte Katalysatorausbeute des Katalysators auf dem anorganischen Halogenidträger (Xn) 0.01 bis 0.99 beträgt.

12. Katalysatormischung nach Anspruch 10 oder 11, dadurch gekennzeichnet, dass der Ziegler-Katalysator einen Magnesiumdihalogenidträger hat und dass der Wert von Xn 0.1 bis 0.9 ist.

13. Katalysatormischung nach den Ansprüchen 10 bis 12, dadurch gekennzeichnet, dass der Ziegler-Typ-Katalysator auf einem anorganischen Halogenidträger (1) ein auf Magnesiumchlorid getragener Titantetraalkoxidkatalysator ist, der mit einer aluminiumhaltigen Verbindung reduziert worden ist, wobei die Atomverhältnisse von Mg:Ti 0.1:1 bis 200:1; Al:Ti 0.5:1 bis 200:1 und xsCl:Al 0:1 bis 10:1 sind und der Katalysator auf einem anorganischen Oxidträger (2) von Siliciumdioxid getragen wird und Chromoxid in einem Atomverhältnis von Si:Cr von 10:1 bis 1000:1 vorhanden ist.

14. Katalysatormischung nach Anspruch 13, dadurch gekennzeichnet, dass das Atomverhältnis von Mg:Ti 10:1 bis 50:1; das Atomverhältnis Al:Ti 5:1 bis 50:1 beträgt; das Atomverhältnis von xsCl:Al 0.1:1 bis 0.4:1 beträgt und das Atomverhältnis von Si:Cr 50:1 bis 200:1 beträgt.

## Revendications

1. Procédé de polymérisation d'une ou plusieurs $\alpha$-oléfines en présence de quantités catalytiques d'un catalyseur à métal de transition sur support, caractérisé par le fait que la polymérisation est effectuée en présence d'un mélange de quantités catalytiques d'au moins deux catalyseurs à métal de transition sur supports indépendants comprenant (1) au moins un catalyseur Ziegler contenant du titane, du vanadium ou leur mélange, se trouvant sur support d'halogénure minéral, et (2) au moins un catalyseur, contenant du chrome, sur support d'oxyde minéral.

2. Procédé selon la revendication 1, caractérisé par le fait que les catalyseurs sur supports sont utilisés en des quantités telles que le rendement fractionnel catalytique (Xn) à partir du catalyseur sur support d'halogénure minéral est de 0,01 à 0,99.

3. Procédé selon la revendication 1 ou 2, caractérisé par le fait que le catalyseur Ziegler est sur un support d'un dihalogénure de magnésium et que la valeur pour Xn est de 0,1 à 0,9.

4. Procédé selon l'une quelconque des revendications 1, 2 ou 3, caractérisé par le fait que la polymérisation est effectuée dans des conditions de polymérisation en solution.

5. Procédé selon l'une quelconque des revendications 1, 2, 3 ou 4, caractérisé par le fait que le catalyseur Ziegler sur support d'halogénure minéral (1) est un catalyseur de tétra-alcoolate de titane sur support de chlorure de magnésium réduit avec un composé contenant de l'aluminium dans lequel les rapports atomiques Mg:Ti va de 0,1:1 à 200:1; Al:Ti va de 0,5:1 à 200:1, et xsCl:Al va de 0:1 à 10:1, et que le catalyseur (2) sur support d'oxyde minéral est sur un support de silice et contient de l'oxyde de chrome dans un rapport atomique Si:Cr allant de 10:1 à 1000:1.

6. Procédé selon l'une quelconque des revendications 1, 2, 3, 4, ou 5, caractérisé par le fait que l'éthylène est polymérisé dans des conditions de polymérisation en solution.

7. Procédé selon la revendication 6, caractérisé par le fait que l'éthylène est copolymérisé avec au moins une autre $\alpha$-oléfine ayant de 3 à environ 10 atomes de carbone.

8. Procédé selon la revendication 7, caractérisé par le fait que ladite autre $\alpha$-oléfine est l'octène-1, l'hexène-1, le butène-1 ou leur mélange.

9. Procédé selon la revendication 8, caractérisé par le fait que l'autre $\alpha$-oléfine est l'octène-1.

10. Catalyseur de polymérisation d'$\alpha$-oléfines qui est un mélange d'au moins deux catalyseurs à métal de transition sur support indépendant comprenant (1) au moins un catalyseur de type Ziegler contenant du titane, du vanadium ou leur mélange, sur support d'halogénure minéral, et (2) au moins un catalyseur contenant du chrome, sur support d'oxyde minéral.

11. Mélange catalytique selon la revendication 10, caractérisé par le fait que le catalyseur sur

**0 056 831**

support d'halogénure minéral et le catalyseur sur support d'oxyde minéral sont présents en des quantités telles, que le rendement fractionnel catalytique (Xn) à partir du catalyseur sur support d'halogénure minéral est de 0,01 à 0,99.

12. Mélange catalytique selon la revendication 10 ou 11, caractérisé par le fait que le catalyseur Ziegler est sur un support d'un dihalogénure de magnésium, et que la valeur pour Xn est de 0,1 à 0,9.

13. Mélange catalytique selon l'une quelconque des revendications 10 à 12, caractérisé par le fait que le catalyseur du type Ziegler sur support d'halogénure minéral (1) est un catalyseur de tétra-alcoolate de titane sur support de chlorure de magnésium réduit avec un composé contenant de l'aluminium dans lequel les rapports atomiques Mg:Ti va de 0,1:1 à 200:1; Al:ti va de 0,5:1 à 200:1, et xsCl:Al va de 0:1 à 10:1, et que le catalyseur (2) sur support d'oxyde minéral est sur support de silice et contient de l'oxyde de chrome dans une rapport atomique Si:Cr de 10:1 à 1000:1.

14. Mélange catalytique selon la revendication 13, caractérisé par le fait que le rapport atomique Mg:Ti est de 10:1 à 50:1; le rapport atomique Al:Ti est 5:1 à 50:1; le rapport atomique de xsCl:Al est 0,1:1 à 0,4:1; et le rapport atomique Si:Cr est 50:1 à 200:1.